# EUROPÄISCHE PATENTSCHRIFT

(11) **EP 3 581 009 B1**
(45) Veröffentlichungstag und Bekanntmachung des Hinweises auf die Patenterteilung: **22.06.2022**
(21) Anmeldenummer: 19179044.3
(22) Anmeldetag: 07.06.2019
(51) Int. Cl.: A01B 59/06, A01B 63/108

(54) **HALTERAHMEN FÜR EINEN FRONTKRAFTHEBER**
SUPPORT FRAME FOR A FRONT HYDRAULIC LIFT
CADRE DE SUPPORT POUR UN DISPOSITIF DE LEVAGE AVANT

(30) Priorität: 12.06.2018 DE 102018209347
(43) Veröffentlichungstag der Anmeldung: 18.12.2019
(73) Patentinhaber: Deere & Company, Moline, IL 61265 (US)
(72) Erfinder: Patino, Mario, 68163 Mannheim (DE); Heitlinger, Martin, 68163 Mannheim (DE)
(74) Vertreter: Dehnhardt, Florian Christopher

(56) Entgegenhaltungen:
- DE-C1- 3 823 491
- GB-A- 2 182 834
- GB-A- 2 512 660
- KR-B1- 101 354 769
- US-A1- 2006 018 746
- US-A1- 2017 290 258

## Beschreibung

Die Erfindung betrifft einen Halterahmen zur Halterung eines Frontkrafthebers an einem Traktor.

Ein derartiger Halterahmen weist einen Anlenkteil auf, an dem der Frontkraftheber gelenkig gelagert ist. Diese Anlenkung trägt dazu bei, dass der Frontkraftheber die gewünschten Bewegungsabläufe relativ zu einer Tragstruktur des Traktors durchführen kann. Die Dokumente DE 38 23 491 C1, US 2006/018746 A1, KR 101 354 769 B1 und GB 2 182 834 A beschreiben bekannte Halterahmen zur Halterung eines Frontkrafthebers an einem Traktor.

Der vorliegenden Erfindung liegt die Aufgabe zugrunde, einen Halterahmen hinsichtlich seiner Funktionalität für einen Frontkraftheber zu verbessern.

Diese Aufgabe wird durch einen Halterahmen mit den Merkmalen des Patentanspruchs 1 gelöst.

Weitere vorteilhafte Ausgestaltungen des erfindungsgemäßen Halterahmens gehen aus den Unteransprüchen hervor.

Gemäß Anspruch 1 weist der Halterahmen einen Anlenkteil zur Anlenkung des Frontkrafthebers und einen Verbindungsteil zur Verbindung des Anlenkteils mit einer Tragstruktur des Traktors auf. Der Anlenkteil enthält einen Anlagebereich, während der Verbindungsteil einen Gegenanlagebereich enthält. Der Anlagebereich und der Gegenanlagebereich wirken miteinander zusammen, um eine mechanische Kopplung des Anlenkteils mit dem Verbindungsteil zu erzielen. Hierbei sind der Anlagebereich und der Gegenanlagebereich durch Spannmittel (z.B. Spannschrauben) miteinander lösbar verspannt. Es handelt sich also um eine lösbare Kopplung zwischen dem Anlenkteil und dem Verbindungsteil. Die Kopplung ist derart ausgebildet, dass sich der gekoppelte Anlenkteil während der Kopplung wahlweise in einer von mehreren möglichen, unterschiedlichen Kopplungspositionen bezüglich des Verbindungsteils befindet.

Die unterschiedlichen Kopplungspositionen ermöglichen es, dass der Halterahmen an unterschiedliche Randbedingungen (z.B. unterschiedliche Größe der Traktorreifen) angepasst werden kann. Folglich kann der am Halterahmen montierte Frontkraftheber bzw. Unterlenker trotz unterschiedlicher Randbedingungen beispielsweise etwa dieselbe gewünschte Relativposition bezüglich des Erdbodens oder der Vorderachse des Traktors beibehalten. Hierdurch kann derselbe Frontkraftheber ohne besondere technische Veränderungen und Anpassungen an unterschiedlichen Traktoren verwendet werden, was seine Funktionalität hinsichtlich unterschiedlicher Anwendungen signifikant unterstützt.

Die Spannmittel können unterschiedlich, z.B. als Spannschrauben oder Spannbolzen, ausgebildet sein. Die Anzahl einzelner Spannmittel an einem Anlagebereich kann abhängig von den zu übertragenden Kräften zwischen dem Anlenkteil und dem Verbindungsteil unterschiedlich festgelegt sein.

Vorzugsweise erstreckt sich der Anlenkteil entlang einer Hochrichtung (vorzugsweise eine Hochachse des Traktors), während sich der Verbindungsteil entlang einer rechtwinklig zur Hochrichtung verlaufenden Längsrichtung (vorzugsweise eine Längsachse des Traktors) erstreckt. Mit Hilfe des Anlagebereichs und des Gegenanlagebereichs können deshalb konstruktionstechnisch einfach mehrere unterschiedliche Kopplungspositionen realisiert werden, indem der Anlenkteil beispielsweise entlang der Hochrichtung und/oder der Längsrichtung in unterschiedliche Positionen verlagerbar ist.

Unterschiedliche Kopplungspositionen lassen sich kostengünstig und geometrisch präzise realisieren, indem vorzugsweise mindestens ein Abstandhalter zwischen dem Anlagebereich und dem Gegenanlagebereich vorgesehen ist. Abhängig von der vorgesehenen Anzahl und Dimensionierung bzw. geometrischen Ausgestaltung der Abstandhalter kann dann der Anlenkteil in unterschiedliche Kopplungspositionen überführt werden.

In einer bevorzugten Ausführungsform weist der Anlagebereich eine Anlagefläche auf oder besteht aus einer Anlagefläche, welche mit einer Gegenanlagefläche des Gegenanlagebereichs zusammenwirkt, wobei die Spannrichtung der Spannmittel quer (insbesondere etwa rechtwinklig) zu der Anlagefläche und der Gegenanlagefläche wirksam ist. Eine derartige Konstruktion unterstützt mechanisch stabile Kopplungspositionen des Anlenkteils. Hierbei weist der Gegenanlagebereich die Gegenanlagefläche auf oder besteht aus der Gegenanlagefläche.

Vorzugsweise sind die Anlagefläche und die Gegenanlagefläche parallel zueinander angeordnet, wodurch eine montagefreundliche Handhabung des Anlenkteils und des Verbindungsteils unterstützt wird. Insbesondere sind die Anlagefläche und die Gegenanlagefläche jeweils plan ausgebildet, was die Herstellung des Anlagebereichs und des Gegenanlagebereichs technisch einfach hält.

Um bei der Realisierung der unterschiedlichen Kopplungspositionen den Fertigungsaufwand für den Halterahmen gering zu halten, ist die Anlagefläche und/oder die Gegenanlagefläche vorzugsweise in einem Kopplungswinkel größer 0° und kleiner 90° bezüglich einer Bezugsgeraden, insbesondere der vorgenannten Hochrichtung des Halterahmens, angeordnet.

In weiter bevorzugten Ausführungsformen beträgt der Kopplungswinkel 30° bis 60°, insbesondere 45°, bezüglich der Bezugsgeraden. Dies unterstützt die Realisierung der gewünschten unterschiedlichen Kopplungspositionen bei einem raumsparenden Aufbau des Halterahmens. Außerdem ermöglicht diese Geometrie eine effiziente Kraftübertragung zwischen der Tragstruktur des Traktors und dem Frontkraftheber.

Wie bereits erwähnt, ist der Verbindungsteil des Halterahmens mit dem Anlenkteil lösbar gekoppelt. Der Verbindungsteil kann einstückig oder mehrteilig ausgebildet sein. Er kann an der Tragstruktur des Traktors lösbar oder unlösbar befestigt sein, wodurch auch der gesamte Halterahmen an der Tragstruktur befestigt ist. Im Falle einer unlösbaren Befestigung an der Tragstruktur kann der Verbindungsteil von vornherein einstückiger Bestandteil der Tragstruktur sein. Alternativ kann der Verbindungsteil nachträglich mit der Tragstruktur verbunden sein, z.B. durch Verschweißen.

In einer weiteren bevorzugten Ausführungsform weist der Anlenkteil entlang der Hochrichtung mehrere Anlagebereiche auf. Dies wirkt sich - insbesondere bei spezifischen konstruktionstechnischen Ausgestaltungen des Halterahmens - günstig auf eine stabile Kraftübertragung zwischen dem Verbindungsteil und dem Anlenkteil aus. Entsprechend kann der Verbindungsteil mit mehreren Gegenanlagebereichen ausgebildet sein oder mehrere Verbindungs-Bestandteile mit jeweils einem Gegenanlagebereich aufweisen.

Der erfindungsgemäße Halterahmen wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematische Seitenansicht eines mit einem Traktor verbundenen Halterahmens,
- Fig. 2: eine perspektivische Ansicht einer Ausführungsform des Halterahmens gemäß Fig. 1 mit einer gegenüber Fig. 1 geänderten Kopplungsposition seines Anlenkteils,
- Fig. 3: eine schematische Seitenansicht einer weiteren Ausführungsform des Halterahmens,
- Fig. 4: eine schematische Seitenansicht einer weiteren Ausführungsform des Halterahmens, und
- Fig. 5: eine schematische Seitenansicht einer weiteren Ausführungsform des Halterahmens.

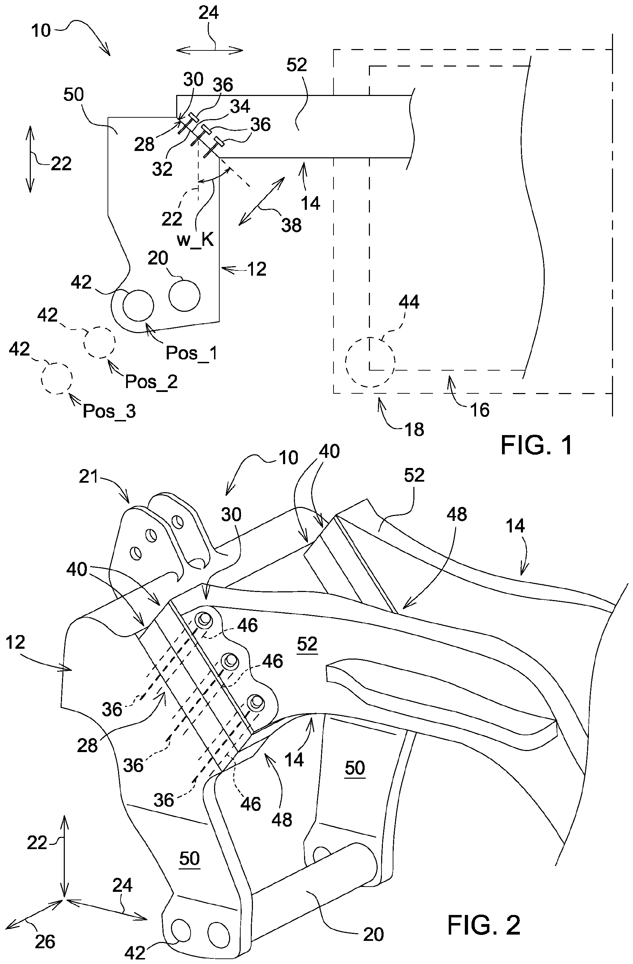

Fig. 1 zeigt schematisch einen Halterahmen 10 mit einem Anlenkteil 12 und einem Verbindungsteil 14. Der Halterahmen 10 ist an einer schematisch dargestellten Tragstruktur 16 (z.B. Chassis) eines Traktors 18 befestigt und dient der gelenkigen Halterung eines hier nicht dargestellten Frontkrafthebers mit zwei Unterlenkern und einem Oberlenker. Dabei sind zwei Unterlenker des Frontkrafthebers mit Parallelabstand an einem Gelenkbolzen 20 des Anlenkteils 12 angelenkt, um Schwenkbewegungen des Frontkrafthebers etwa entlang einer Hochrichtung 22 durchführen zu können. Die Gelenkachse des Gelenkbolzens 20 verläuft in Fig. 1 lotrecht zur Zeichenblattebene.

Der bereits erwähnte und hier nicht dargestellte Oberlenker des Frontkrafthebers ist an einem Gelenkabschnitt 21 des Anlenkteils 12 angelenkt (Fig. 2).

Während sich der Anlenkteil 12 entlang der Hochrichtung 22 erstreckt, ist der Verbindungsteil 14 zumindest abschnittsweise entlang einer Längsrichtung 24 ausgerichtet. Die Hochrichtung 22 und die Längsrichtung 24 sind rechtwinklig zueinander angeordnet und verlaufen jeweils lotrecht zu einer Querrichtung 26, entlang der sich die Gelenkachse des Gelenkbolzens 20 erstreckt.

Gemäß Fig. 1 weist der Anlenkteil 12 einen Anlagebereich 28 auf, welcher mit einem Gegenanlagebereich 30 des Verbindungsteils 14 zusammenwirkt, um eine mechanische Kopplung zwischen dem Anlenkteil 12 und dem Verbindungsteil 14 zu erreichen. Der Anlagebereich 28 weist eine Anlagefläche 32 auf, welche zur Kopplung mit einer Gegenanlagefläche 34 des Gegenanlagebereichs 30 zusammenwirkt. Während der Kopplung bleiben die Anlagefläche 32 und die Gegenanlagefläche 34 durch Spannmittel 36 in Form mehrerer Spannschrauben aneinander fixiert. Hierbei verläuft eine Spannkraftrichtung 38 der Spannmittel 36 quer zu der Anlagefläche 32 und der Gegenanlagefläche 34. Mit dem Begriff "quer" können unterschiedliche Winkel größer 0° und kleiner 180° der Spannkraftrichtung 38 bezüglich der Anlagefläche 32 und/oder der Gegenanlagefläche 34 gemeint sein. Bei der Ausführungsform gemäß Fig. 1 ist die Spannkraftrichtung 38 in einem Winkel von 90° relativ zu der Anlagefläche 32 und der Gegenanlagefläche 34 ausgerichtet.

Die Ausgestaltung und Anzahl der einzelnen Spannmittel 36 kann unterschiedlich sein. Während bei der Ausführungsform gemäß Fig. 1 und Fig. 2 zwei Sätze à drei, also insgesamt sechs, Spannschrauben vorgesehen sind, kann je nach erforderlicher Kraftübertragung zwischen dem Anlenkteil 12 und dem Verbindungsteil 14 auch eine andere Anzahl geeignet sein.

In Fig. 2 ist zudem erkennbar, dass ein Kopplungsbereich 48 (d.h. ein zusammenwirkendes Paar aus einem Anlagebereich 28 und einem Gegenanlagebereich 30 mit ggf. mindestens einem Abstandhalter 40) entlang der Querrichtung 26 durch einen zweiten solchen Kopplungsbereich 48 ergänzt wird. Hierdurch sind die beiden gleichartig ausgebildeten Seitenwangen 50 des Anlenkteils 12 jeweils mit einem der beiden ebenfalls gleichartig ausgebildeten Verbindungsstreben 52 des Verbindungsteils 14 gekoppelt. Fig. 1 hingegen ist der zweite Kopplungsbereich 48 unsichtbar.

Der Querschnitt der Anlagefläche 32 und/oder der Gegenanlagefläche 34 können unterschiedlich ausgestaltet sein. Sofern die Flächen keine plane Ebene aufweisen, sind sie vorzugsweise als gegenseitige Negativreliefs ausgebildet, um eine formschlüssige Kontaktlage aneinander zu ermöglichen. In Fig. 1 sind die Anlagefläche 32 und die Gegenanlagefläche 34 jeweils als eine plane Ebene ausgebildet und liegen während der Kopplung parallel aneinander an. Dabei schließen die Anlagefläche 32 und die Gegenanlagefläche 34 mit der Hochrichtung 22 als Bezugsgerade einen Kopplungswinkel w_K von etwa 45° ein. Andere bevorzugte Kopplungswinkel w_K liegen in dem Bereich von 30° bis 60° bezüglich der Hochrichtung 22.

Auf der Basis der beschriebenen mechanischen Kopplung lassen sich unter Verwendung mindestens eines Abstandhalters 40 (Fig. 2) unterschiedliche Kopplungspositionen des Anlenkteils 12 bezüglich der Hochrichtung 22 und der Längsrichtung 24 erzielen. Folglich sind diese Kopplungspositionen des Anlenkteils 12 auch relativ zum Verbindungsteil 14 unterschiedlich angeordnet. Bei der hier in Fig. 2 dargestellten Ausführungsform sind zwei Abstandhalter 40 verwendet, so dass insgesamt drei unterschiedliche Kopplungspositionen Pos_1, Pos_2 und Pos_3 realisierbar sind. In Fig.1 sind die unterschiedlichen Kopplungspositionen Pos_2 und Pos_3 durch eine verlagerte und gestrichelte Darstellung einer Wandöffnung 42 des Anlenkteils 12 angedeutet.

Die mechanische Kopplung mit einer unterschiedlichen Anzahl von Abstandhaltern 40 lässt sich beispielsweise bei unterschiedlichen Größen der Traktorreifen an einer Vorderachse 44 des Traktors 18 vorteilhaft anwenden. Die Vorderachse 44 ist parallel zur Querrichtung 26 angeordnet. Im Falle eines Austausches einer spezifischen Reifengröße gegen eine andere Reifengröße lässt sich bei Verwendung eines entsprechend dimensionierten Abstandhalters 40 und/oder einer entsprechenden Anzahl von Abstandhaltern 40 erreichen, dass der Frontkraftheber immer einen optimalen Abstand zum Erdboden und zu der Vorderachse 44 behält.

Bei der dargestellten Ausführungsform sind drei unterschiedliche Reifengrößen vorgesehen. Bei der kleinsten Reifengröße wird kein Abstandhalter 40 eingesetzt (Kopplungsposition Pos_1). Bei der mittleren Reifengröße wird zwischen der Anlagefläche 32 und der Gegenanlagefläche 34 ein Abstandhalter 40 angeordnet (Kopplungsposition Pos_2). Im Falle der größten Reifengröße werden zwischen der Anlagefläche 32 und der Gegenanlagefläche 34 - wie in Fig. 2 dargestellt - zwei Abstandhalter 40 angeordnet (Kopplungsposition Pos_3).

Die Dicke des Abstandhalters 40 in Spannkraftrichtung 38 beträgt z.B. 69 mm. Die Verlagerung des Anlenkteils 12 aus seiner ersten Kopplungsposition Pos_1 in seine dritte Kopplungsposition Pos_3 beträgt entlang der Hochrichtung 22 beispielsweise 100 mm und entlang der Längsrichtung 24 beispielsweise 95 mm. Die Abstandhalter 40 sind von Durchgangslöchern 46 durchsetzt, um die Spannmittel 36 von dem Gegenanlagebereich 30 aus mit dem Anlenkteil 12 zu verspannen bzw. zu verschrauben.

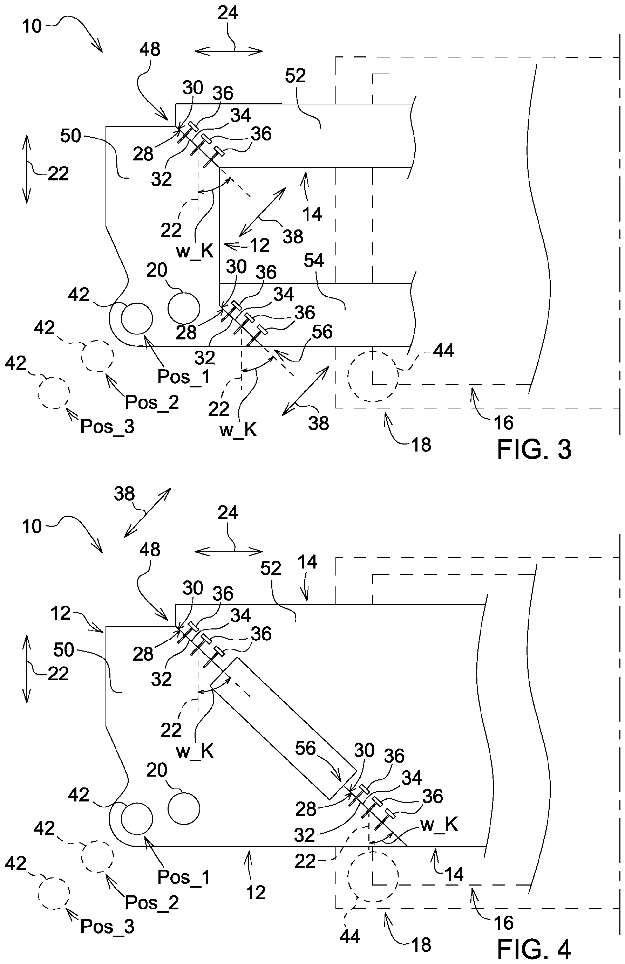

Fig. 3 zeigt eine weitere Ausführungsform des Halterahmens 10. Der Verbindungsteil 14 enthält entlang der Höhenrichtung 22 versetzt eine zusätzliche Verbindungsstrebe 54, welche einen Gegenanlagebereich 30 mit einer Gegenanlagefläche 34 aufweist. Letztere gehört zu einem bezüglich des Kopplungsbereichs 48 in Höhenrichtung 22 versetzt angeordneten zusätzlichen Kopplungsbereich 56. Entsprechend weist der Anlenkteil 12 entlang der Höhenrichtung 22 versetzt zwei Anlagebereiche 28 auf. Die Kopplungswinkel w_K beider Kopplungsbereiche 48, 56 sind vorzugsweise identisch.

In Fig. 4 weist der Verbindungsteil 14 entlang der Höhenrichtung 22 eine einzige Verbindungsstrebe 52 auf. Im Gegensatz zur Ausführungsform gemäß Fig. 1 weist die Verbindungsstrebe 52 jedoch zwei entlang der Höhenrichtung 22 voneinander beabstandete Gegenanlagebereiche 30 mit zwei Gegenanlageflächen 34 auf, welche Bestandteil zweier Kopplungsbereiche 48, 56 sind. Entsprechend enthält die Seitenwange 50 des Anlenkteils 12 entlang der Höhenrichtung 22 zwei voneinander beabstandete Anlagebereiche 28 mit zwei Anlageflächen 32 auf. Die Kopplungswinkel w_K beider Kopplungsbereiche 48, 56 sind wiederum vorzugsweise identisch dimensioniert.

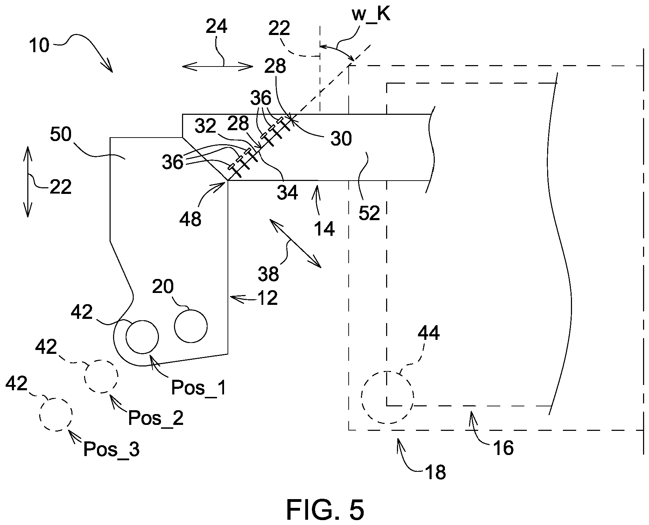

Bei der Ausführungsform gemäß Fig. 5 sind die Anlagefläche 32 und die Gegenanlagefläche 34 im Vergleich zur Variante gemäß Fig. 1 um etwa 90° versetzt bezüglich des Scheitelpunktes des Kopplungswinkels w_K angeordnet. Der Betrag des in Fig. 5 angedeuteten Kopplungswinkels w_K ist deshalb identisch mit dem Betrag des in Fig. 1 dargestellten Kopplungswinkels w_K. Die geometrische Ausgestaltung des Kopplungsbereichs 48 gemäß Fig. 5 ermöglicht die gleichen unterschiedlichen Kopplungspositionen Pos_1, Pos_2, Pos_3 ohne Verwendung von Abstandhaltern 40. Vielmehr ist es ausreichend, für jede der Kopplungspositionen Pos_1, Pos_2, Pos_3 eine entsprechende Vielzahl von Spannmitteln 36 vorzuhalten, welche dann abhängig von der jeweils gewünschten Kopplungsposition Pos_1, Pos_2 oder Pos_3 eingesetzt werden. Die jeweilige Kupplungsposition Pos_1, Pos_2 oder Pos_3 ergibt sich dabei aus dem jeweils gewählten Parallelversatz der Anlagefläche 32 gegenüber der Gegenanlagefläche 34.

Hierbei ist die in Fig. 5 dargestellte Anzahl von sechs Spannschrauben 36 lediglich beispielhaft. Zur Realisierung der drei unterschiedlichen Kopplungspositionen Pos_1, Pos_2 oder Pos_3 kann auch eine andere Anzahl von Spannmitteln 36 geeignet sein.

Es sei noch erwähnt, dass einzelne in den Zeichnungen dargestellte Details einerseits schematisch und andererseits nicht notwendigerweise maßstäblich sind.

## Patentansprüche

1. Halterahmen (10) zur Halterung eines Frontkrafthebers an einem Traktor (18), wobei
- der Halterahmen (10) einen Anlenkteil (12) zur Anlenkung des Frontkrafthebers und einen Verbindungsteil (14) zur Verbindung des Anlenkteils (12) mit einer Tragstruktur (16) des Traktors (18) aufweist,
- der Anlenkteil (12) einen Anlagebereich (28) aufweist, welcher mit einem Gegenanlagebereich (30) des Verbindungsteils (14) zur Kopplung des Anlenkteils (12) mit dem Verbindungsteil (14) zusammenwirkt,
- der Anlagebereich (28) und der Gegenanlagebereich (30) in einer Kopplungsposition (Pos_1, Pos_2, Pos_3) durch Spannmittel (36) miteinander lösbar verspannt sind, und
- der gekoppelte Anlenkteil (12) mittels der Spannmittel (36) wahlweise in einer von mehreren unterschiedlichen Kopplungspositionen (Pos_1, Pos_2, Pos_3) relativ zum Verbindungsteil (14) verspannbar ist.

2. Halterahmen nach Anspruch 1, **dadurch gekennzeichnet, dass** sich der Anlenkteil (12) entlang einer Hochrichtung (22) erstreckt und sich der Verbindungsteil (14) entlang einer rechtwinklig zur Hochrichtung (22) verlaufenden Längsrichtung (24) erstreckt.

3. Halterahmen nach Anspruch 2, **dadurch gekennzeichnet, dass** die Kopplungspositionen (Pos_1, Pos_2, Pos_3) des Anlenkteils (12) entlang der Hochrichtung (22) und/oder entlang der Längsrichtung (24) unterschiedlich sind.

4. Halterahmen nach wenigstens einem der vorhergehenden Ansprüche, **dadurch gekennzeichnet, dass** zwischen dem Anlagebereich (28) und dem Gegenanlagebereich (30) mindestens ein Abstandhalter (40) lösbar angeordnet ist.

5. Halterahmen nach wenigstens einem der vorhergehenden Ansprüche, **dadurch gekennzeichnet, dass** der Anlagebereich (28) eine Anlagefläche (32) aufweist, welche mit einer Gegenanlagefläche (34) des Gegenanlagebereichs (30) zusammenwirkt bei einer quer zu der Anlagefläche (32) und der Gegenanlagefläche (34) verlaufenden Spannkraftrichtung (38) der Spannmittel (36).

6. Halterahmen nach Anspruch 5, **dadurch gekennzeichnet, dass** die Anlagefläche (32) und die Gegenanlagefläche (34) parallel zueinander angeordnet sind.

7. Halterahmen nach Anspruch 5 oder 6, **dadurch gekennzeichnet, dass** die Anlagefläche (32) und/oder die Gegenanlagefläche (34) in einem Kopplungswinkel (w_K) größer 0° und kleiner 90° bezüglich einer Bezugsgeraden (22) angeordnet ist.

8. Halterahmen nach Anspruch 7, **dadurch gekennzeichnet, dass** der Kopplungswinkel (w_K) 30° bis 60°, insbesondere 45°, bezüglich der Bezugsgeraden (22) beträgt.

9. Halterahmen nach wenigstens einem der Ansprüche 2 bis 8, **dadurch gekennzeichnet, dass** der Anlenkteil (12) entlang der Hochrichtung (22) mehrere Anlagebereiche (28) aufweist.

10. Traktor (18) mit einem Halterahmen (10) nach wenigstens einem der vorhergehenden Ansprüche.

## Claims

1. Holding frame (10) for mounting a front power lift on a tractor (18), wherein
- the holding frame (10) has an articulation part (12) for articulating the front power lift and a connecting part (14) for connecting the articulation part (12) to a supporting structure (16) of the tractor (18),
- the articulation part (12) has a contact region (28) which cooperates with a mating contact region (30) of the connecting part (14) to couple the articulation part (12) to the connecting part (14),
- the contact region (28) and the mating contact region (30) are clamped releasably together in a coupling position (Pos_1, Pos_2, Pos_3) by clamping means (36),
- the coupled articulation part (12) is able to be clamped selectively in one of a plurality of different coupling positions (Pos_1, Pos_2, Pos_3) relative to the connecting part (14) by means of the clamping means (36).

2. Holding frame according to Claim 1, **characterized in that** the articulation part (12) extends along a vertical direction (22) and the connecting part (14) extends along a longitudinal direction (24) extending at right angles to the vertical direction (22) .

3. Holding frame according to Claim 2, **characterized in that** the coupling positions (Pos_1, Pos_2, Pos_3) of the articulation part (12) are different along the vertical direction (22) and/or along the longitudinal direction (24).

4. Holding frame according to at least one of the preceding claims, **characterized in that** at least one spacer (40) is arranged releasably between the contact region (28) and the mating contact region (30) .

5. Holding frame according to at least one of the preceding claims, **characterized in that** the contact region (28) has a contact face (32) which cooperates with a mating contact face (34) of the mating contact region (30) when a clamping-force direction (38) of the clamping means (36) extends transversely to the contact face (32) and the mating contact face (34) .

6. Holding frame according to Claim 5, **characterized in that** the contact face (32) and the mating contact face (34) are arranged parallel to one another.

7. Holding frame according to Claim 5 or 6, **characterized in that** the contact face (32) and/or the mating contact face (34) is/are arranged at a coupling angle (w_K) greater than 0° and less than 90° with respect to a reference line (22).

8. Holding frame according to Claim 7, **characterized in that** the coupling angle (w_K) is 30° to 60°, in particular 45°, with respect to the reference line (22) .

9. Holding frame according to at least one of Claims 2 to 8, **characterized in that** the articulation part (12) has a plurality of contact regions (28) along the vertical direction (22).

10. Tractor (18) having a holding frame (10) according to at least one of the preceding claims.

## Revendications

1. Cadre de support (10) pour le support d'un relevage avant sur un tracteur (18),
- le cadre de support (10) présentant une partie d'articulation (12) pour l'articulation du relevage avant et une partie de liaison (14) pour la liaison de la partie d'articulation (12) à une structure porteuse (16) du tracteur (18),
- la partie d'articulation (12) présentant une zone d'appui (28), qui coopère avec une zone d'appui antagoniste (30) de la partie de liaison (14) pour l'accouplement de la partie d'articulation (12) à la partie de liaison (14),
- la zone d'appui (28) et la zone d'appui antagoniste (30) étant serrées l'une contre l'autre de manière amovible dans une position d'accouplement (Pos_1, Pos_2, Pos_3) par des moyens de serrage (36), et
- la partie d'articulation accouplée (12) pouvant être serrée par rapport à la partie de liaison (14) au moyen des moyens de serrage (36), au choix, dans une parmi plusieurs positions d'accouplement différentes (Pos_1, Pos_2, Pos_3).

2. Cadre de support selon la revendication 1, **caractérisé en ce que** la partie d'articulation (12) s'étend le long d'une direction verticale (22) et la partie de liaison (14) s'étend le long d'une direction longitudinale (24) s'étendant à angle droit de la direction verticale (22).

3. Cadre de support selon la revendication 2, **caractérisé en ce que** les positions d'accouplement (Pos_1, Pos_2, Pos_3) de la partie d'articulation (12) sont différentes le long de la direction verticale (22) et/ou le long de la direction longitudinale (24).

4. Cadre de support selon au moins l'une quelconque des revendications précédentes, **caractérisé en ce qu'**au moins un espaceur (40) est agencé de manière amovible entre la zone d'appui (28) et la zone d'appui antagoniste (30).

5. Cadre de support selon au moins l'une quelconque des revendications précédentes, **caractérisé en ce que** la zone d'appui (28) présente une surface d'appui (32), qui coopère avec une surface d'appui antagoniste (34) de la zone d'appui antagoniste (30) pour une direction de force de serrage (38) des moyens de serrage (36) s'étendant transversalement à la surface d'appui (32) et à la surface d'appui antagoniste (34).

6. Cadre de support selon la revendication 5, **caractérisé en ce que** la surface d'appui (32) et la surface d'appui antagoniste (34) sont agencées parallèlement l'une à l'autre.

7. Cadre de support selon la revendication 5 ou 6, **caractérisé en ce que** la surface d'appui (32) et/ou la surface d'appui antagoniste (34) sont agencées selon un angle d'accouplement (w_K) supérieur à 0° et inférieur à 90° par rapport à une droite de référence (22).

8. Cadre de support selon la revendication 7, **caractérisé en ce que** l'angle d'accouplement (w_K) est de 30° à 60°, notamment de 45°, par rapport à la droite de référence (22).

9. Cadre de support selon au moins l'une quelconque des revendications 2 à 8, **caractérisé en ce que** la partie d'articulation (12) présente plusieurs zones d'appui (28) le long de la direction verticale (22).

10. Tracteur (18) comprenant un cadre de support (10) selon au moins l'une quelconque des revendications précédentes.
